# EUROPÄISCHE PATENTSCHRIFT

(11) **EP 0 754 622 B1**
(45) Veröffentlichungstag und Bekanntmachung des Hinweises auf die Patenterteilung: **31.03.1999**
(21) Anmeldenummer: 96110280.3
(22) Anmeldetag: 26.06.1996
(51) Int. Cl.: B64D 11/00

(54) **Vertikalförderer zum Transport von Verpflegungsgütern an Bord eines Flugzeuges**
Vertical conveyor to transport food onto an aircraft
Transport d'aliments à bord d'un avion

(30) Priorität: 15.07.1995 DE 19525878
(43) Veröffentlichungstag der Anmeldung: 22.01.1997
(73) Patentinhaber: DaimlerChrysler Aerospace Airbus Gesellschaft mit beschränkter Haftung, 21129 Hamburg (DE)
(72) Erfinder: Rössner, Bernd, 21224 Rosengarten (DE); Sprenger, Wilfried, 21698 Harsefeld-Issendorf (DE); Kleinwort, Hinnerk, 22305 Hamburg (DE)
(74) Vertreter: Hansmann, Dierk, Dipl.-Ing.

(56) Entgegenhaltungen:
- EP-A- 0 546 968
- DE-A- 4 302 706
- US-A- 3 864 846
- US-A- 4 384 191

## Beschreibung

Die Erfindung bezieht sich auf einen Vertikalförderer zum Transport von Verpflegungsgütern an Bord eines Flugzeuges.

Durch die DE 43 02 706 A1 ist eine Anordnung zur Handhabung von Speisen und Getränken an Bord eines Flugzeuges bekannt, wobei die Menüschachteln direkt, das heißt ohne Servierwagen in einen Behälter vom Format eines Frachtcontainers eingelagert sind und ein Transportkanal vorgesehen ist, wodurch die Menüschachteln von dem Behälter zu den einzelnen Entnahmestellen befördert werden. Dabei werden die Menüschachteln mittels einer seitens des Behälters angeordneten steuerbaren Entladeeinrichtung entnommen und über einen Vertikalförderer in den Transportkanal eingegeben. Der Vertikalförderer weist zwei gegensinnig umlaufende Förderbänder auf, die an den Menüschachteln über quer zur Laufrichtung der Bänder orientierte leistenförmige Mitnehmer angreifen. Zur Koordination der einzelnen Übergabe- und Transportbewegungen ist eine zentrale Steuereinheit vorgesehen, die einen weitgehend automatischen Funktionsablauf ermöglicht. Falls warme Speisen serviert werden sollen, so erfolgt das entsprechende Aufwärmen innerhalb einer sogenannten Wärmzelle. In dieser kann gleichzeitig der Inhalt einer bestimmten Anzahl von Menüschachteln nach einem nicht näher bezeichneten Wirkungsprinzip erwärmt werden. Hierbei ist jedoch von Nachteil, daß die Wärmzelle ein eigenständiges Gerät mit einem bestimmten Platzbedarf darstellt, das auch unter Gewichtsaspekten nicht als optimale Lösung angesehen werden kann.

Es wird noch auf die US 43 84 191 verwiesen, die eine Vorrichtung zum Aufwärmen von Speisen zeigt, wobei bei der Variante nach Fig. 6 die Wärmezufuhr in den Zwischenräumen zwischen den gestapelten Menüschachteln erfolgt. Hierbei wird aufgeheizte Luft durch die genannten Zwischenräume bewegt, wobei die Luft vorher eine steuerbare Lochblende durchläuft, so daß einzelne Stapel oder bestimmte Bereiche davon gezielt stärker aufgeheizt werden können als andere. Auch diese Vorrichtung wird eigens zum Zweck des Aufwärmens von Speisen installiert, so daß Raumvorteile nicht genutzt werden. Die Wärmezufuhr mittels eines aufgeheizten Mediums, also auf indirektem Wege, geschieht mit einem relativ niedrigen Wirkungsgrad.

Daher liegt der Erfindung die Aufgabe zugrunde, einen Vertikalförderer der eingangs genannten Art so auszubilden, daß er die zum Erwärmen der Speisen erforderlichen Funktionselemente umfaßt und die Wärmezufuhr in die Menüschachteln auf direktem Wege erfolgt.

Diese Aufgabe wird bei einem gattungsgemäßen Vertikalförderer durch die kennzeichnenden Merkmale des Anspruchs 1 gelöst.

Vorteilhafte Weiterbildungen der Erfindung sind in den Unteransprüchen angegeben.

Dabei ist insbesondere von Vorteil, daß die zum Erwärmen der Speisen erforderlichen Funktionselemente raumsparend in das Gesamtsystem integriert sind, wodurch sich auch Gewichtsvorteile ergeben. Im übrigen hat sich gezeigt, daß die Speisen durch das zum Erwärmen angewandte Wirkungsprinzip weder in geschmacklicher noch in anderer Hinsicht negativ beeinflußt werden.

Die Erfindung ist anhand der Zeichnung dargestellt und nachfolgend näher erläutert. Es zeigen
- Fig. 1: eine Teilansicht eines Vertikalförderers,
- Fig. 2: eine Übersicht über eine Anordnung zur Handhabung von Verpflegungsgütern an Bord eines Flugzeuges nach Stand der Technik,
- Fig. 3: die Einzelheit III nach Fig. 1 und
- Fig. 4: den Schnitt IV - IV nach Figur 3.

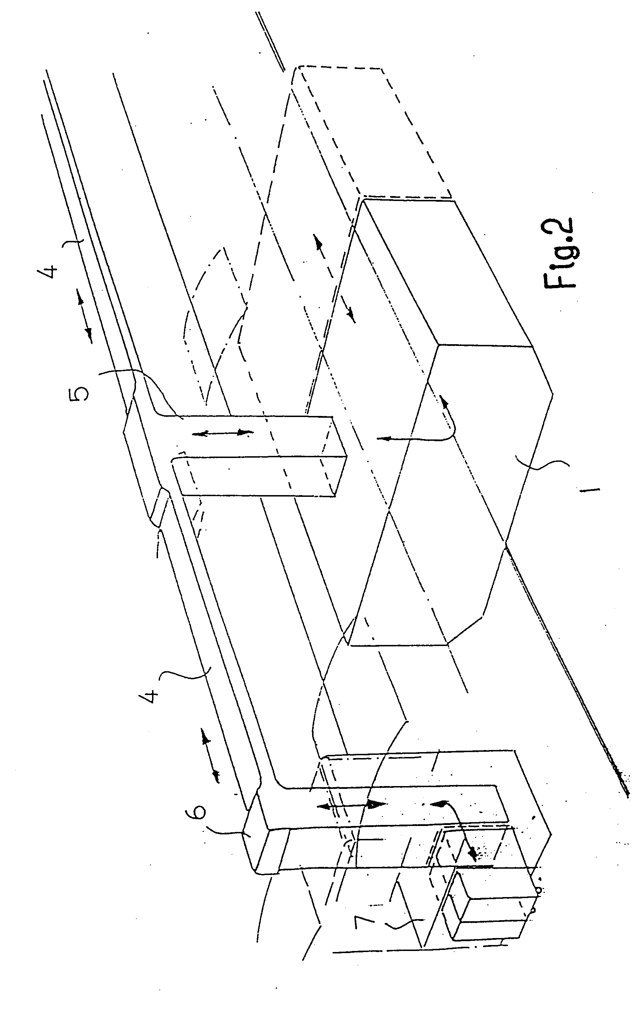

Figur 2 zeigt eine Anordnung zum Transport von Verpflegungsgütern an Bord eines Flugzeuges nach Stand der Technik, wobei Stapeleinheiten bzw. Menüschachteln aus einem Behälter 1 bis zu einer Verteilstation 7 transportiert werden. Der Behälter 1 hat die Abmessungen eines üblichen Frachtcontainers und ist im Frachtraum des Flugzeuges untergebracht, das möglicherweise zwei Passagierdecks aufweist. Der Behälter 1 steht mit einem Vertikalförderer 5 in Verbindung, der seinerseits mit zwei Längskanälen 4 verbunden ist. Während des Betriebes entnimmt eine behälterseitige Umschlageinrichtung je nach Programmanweisung in einem Arbeitsgang eine bestimmte Menge von Menüschachteln 14 und leitet sie an den Vertikalförderer 5 weiter, der sie, je nach Bedarf in einen der Längskanäle 4 eingibt. Anhand der Längskanäle 4 werden die Menüschachteln 14 in Längsrichtung der Passagierkabinen transportiert und gelangen so beispielsweise über einen weiteren Vertikalförderer 6 zu der Verteilstation 7, in der sie zur Versorgung der Passagiere in einzelne Servierwagen 8 eingelagert werden.

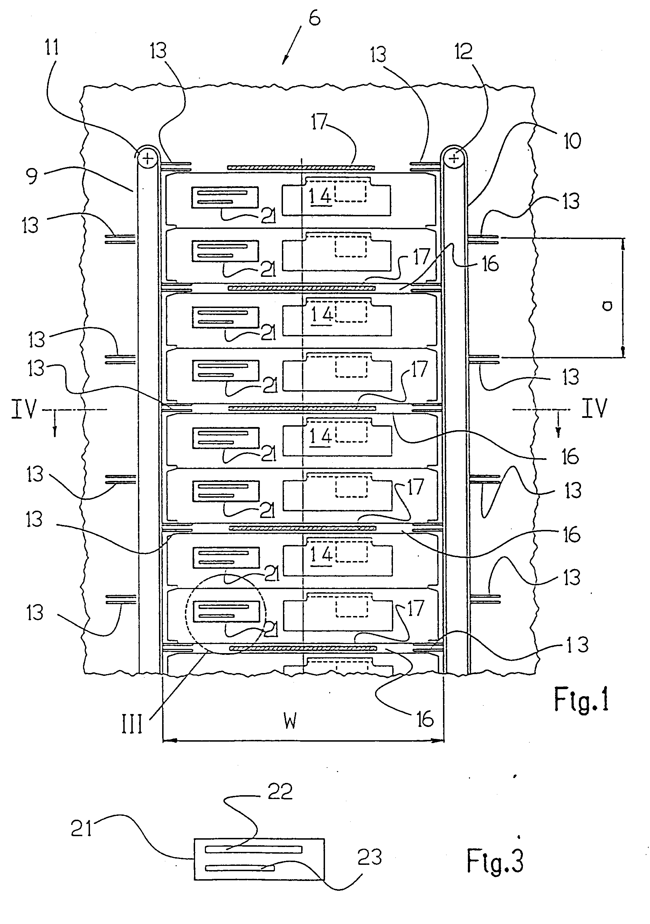

Figur 1 zeigt das obere Ende des Vertikalförderers 6 in schematischer Darstellung. Das hier angewendete Förderprinzip ist an sich bekannt und beruht auf zwei synchron gegensinnig umlaufenden endlosen Riemensystemen 9 und 10, zu deren Betätigung ein ansteuerbarer mit entsprechenden Antriebsrollen zusammenwirkender Antrieb vorgesehen ist. Die Riemensysteme 9,10 sind am oberen Ende des Vertikalförderers 6 jeweils um eine Rolle 11 und 12 geführt und weisen jeweils an ihrer außen liegenden Seite quer zur Laufrichtung der Riemen orientierte leistenförmige Mitnehmer 13 auf, die in Laufrichtung mit gleichmäßigem festem Abstand a angeordnet sind. Innerhalb des Gehäuses 15 des Vertikalförderers 6 sind die oberen Rollen 11,12 und die unteren hier nicht sichtbaren mit ortsfesten Drehachsen so angeordnet, daß zwischen den einander zugewandten Seiten der Riemensysteme 9 und 10 eine lichte Weite w besteht. Damit bilden diese Seiten der Riemensysteme einen vertikalen Schacht. Dieser Schacht ist infolge der Weite w und des Abstandes a so bemessen, daß jeweils oberhalb zweier gegenüberliegender Mitnehmer 13 ein Aufnahmefach für zwei Menüschachteln 14 oder für eine Doppelschachtel entsteht. Zwischen den Schachteln aneinander grenzender Fächer wird dabei jeweils ein Zwischenraum 16 von vorbestimmter Breite gebildet. Die Erstreckung der Staufächer in Tiefenrichtung ist den Abmessungen der Menüschachteln angepaßt. Wie aus Figur 2 ersichtlich, ist der Vertikalförderer 6 voll gekapselt, wobei lediglich im jeweiligen Be- und Entnahmebereich Zugänglichkeit zu den Aufnahmefächern besteht. Mit Hilfe des Vertikalförderers 6 können die mit Verpflegungsgütern gefüllten bzw. leeren Menüschachteln 14 aus dem Frachtraum in die darüber liegenden Passagierdecks und zurück befördert werden. Die vorgenannten Riemensysteme 9,10 bestehen jeweils mindestens aus zwei endlosen Riemen, woran die Mitnehmer 13 befestigt sind. Zur Sicherstellung eines schlupffreien Betriebes sind die Riemen als Zahnriemen ausgebildet. Es ist auch denkbar, daß jedes Riemensystem 9,10 durch ein endloses Band von entsprechender Breite gebildet wird.

Aufgrund der Erfindung ist nun vorgesehen, daß der Vertikalförderer 6 mindestens eine Aufwärmeinrichtung aufweist, die im wesentlichen aus einem um eine vertikale Achse schwenkbaren Paket von Wärmeinduktoren 17 besteht, die jeweils eine Induktionsspule enthalten, und in die zwischen den Menüschachteln 14 bestehenden Zwischenräume 16 ein- und ausschwenkbar sind. Da übliche Servierwagen, wie sie an Bord von Flugzeugen zum Transportieren von Verpflegungsgütern verwendet werden, 14 flache Menüschachteln 14 aufnehmen können, ist die Integration von sieben Wärmeinduktoren 17 in der Aufwärmeinrichtung zu einem Paket besonders vorteilhaft. Damit kann dann gleichzeitig der Inhalt von sieben Staufächern des Vertikalförderers 6 erwärmt werden, was genau dem Inhalt eines Servierwagens entspricht. Das Bild zeigt fünf dieser Wärmeinduktoren 17 in eingeschwenkter Position. Jeder Wärmeinduktor 17 sendet im Betrieb ein hochfrequentes magnetisches Wechselfeld aus, wodurch der Inhalt der Menüschachteln 14 durch Hochfrequenzinduktion erwärmt wird. Hierzu ist ein plattenförmiger elektrischer Leiter innerhalb der Menüschachteln 14 im Bereich der zu erwärmenden Speiseanteile angeordnet, der sich unter der Einwirkung des magnetischen Wechselfeldes erwärmt und so als Wärmequelle zum Erwärmen der Speisen dient. Da der Aufwärmvorgang einige Minuten in Anspruch nimmt, ist es wünschenswert, gleichzeitig eine möglichst große Anzahl von Menüschachteln 14 zu erwarmen und diese nach erfolgter Erwärmung in eine entsprechende Anzahl von Servierwagen auszugeben. Daher besteht eine Ausgestaltung der Erfindung darin, daß das Paket eine größere Anzahl von Wärmeinduktoren 17, vorzugsweise ein Vielfaches von sieben, umfaßt.

Eine andere Ausgestaltung der Erfindung besteht darin, daß die Aufwärmeinrichtung mehrere schwenkbare Pakete von Wärmeinduktoren 17 umfaßt.

Da der Vertikalförderer 6 Teil eines programmsteuerbaren Gesamtsystems ist, kann auch der innerhalb des Vertikalförderers stattfindende Aufwärmvorgang vollautomatisch ablaufen. Hierzu ist vorgesehen, daß der Vertikalförderer mindestens eine Abtasteinrichtung aufweist, mit deren Hilfe an den Menüschachteln 14 angebrachte Datenträger auslesbar sind, die Informationen über den Inhalt der Menüschachteln 14 in maschinenlesbarer Form enthalten. In einer bevorzugten Ausgestaltung handelt es sich bei der Abtasteinrichtung um einen optischen Barcode-Scanner bekannter Art, so daß als Datenträger einfache Klebeetiketten mit entsprechenden Schwarz-/Weißfeldern verwendbar sind. In der gezeigten Beispielausführung sind die Menüschachteln 14 daher mit Klebeetiketten 21 versehen.

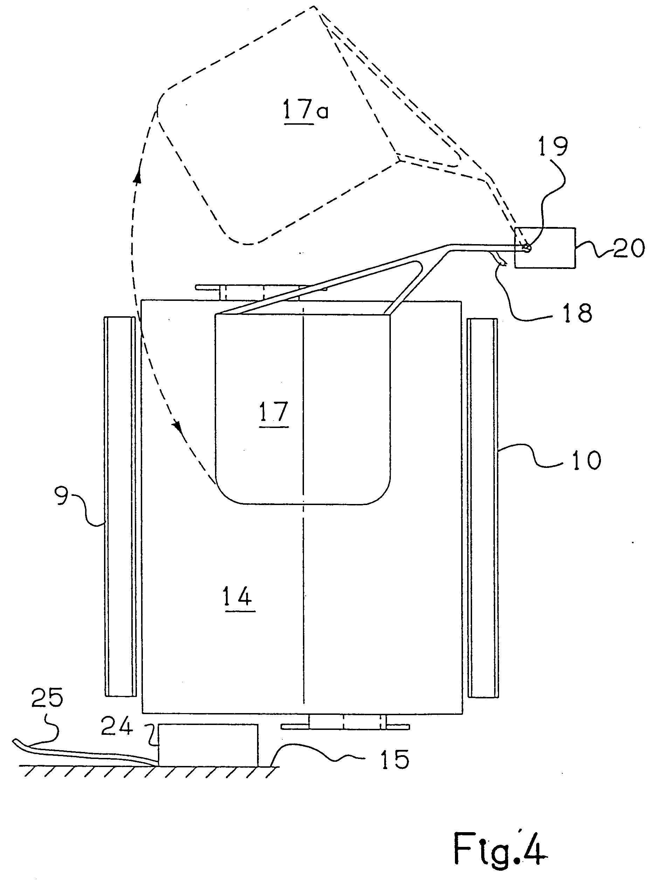

Figur 3 zeigt Einzelheiten eines Klebeetiketts 21 nach Fig. 2. Dieses Etikett 21 weist ein erstes Schriftfeld 22 für Klartextangaben und ein zweites Schriftfeld 23 zur Aufnahme eines Barcodes auf. Dabei sind die Klartextangaben im Falle einer manuellen Handhabung sehr hilfreich. Damit ist der Inhalt jeder einzelnen Menüschachtel 14 durch die Abtasteinrichtung erfaßbar, wodurch die Möglichkeit eröffnet wird, die den einzelnen Wärmeinduktoren zuzuführende Aufwärmenergie per Programm dem Inhalt der betreffenden Schachteln anzupassen. Es sind auch Datenträger anderer Art denkbar, beispielsweise solche, wobei die Informationen als magnetische Muster vorliegen. Infolge der Abtasteinrichtung kann beispielsweise sichergestellt werden, daß Menüschachteln 14, die nur Kaltspeisen enthalten, nicht erwärmt werden. Außerdem ist es anhand der Abtasteinrichtung möglich, wenn mehrere dieser Einrichtungen im Gesamtsystem angeordnet sind, bestimmte Menüschachteln per Programm innerhalb des Systems zu verfolgen und einer bestimmten Ausgabeeinheit zuzuleiten.

Figur 4 zeigt den Schnitt IV-IV nach Figur 2, der durch einen der Zwischenräume 16 oberhalb des betreffenden Wärmeinduktors 17 geführt ist. Der Schnitt zeigt außer den Riemensystemen 9 und 10 den Wärmeinduktor 17 in seiner eingeschwenkten Position, in der er einen Teil der betreffenden Menüschachtel 14 überdeckt. Zur Ausführung der Schwenkbewegungen um die vertkale Achse 19 ist ein Motor 20 vorgesehen. In der gezeigten Arbeitsposition erfolgt der Aufheizvorgang der Speisen. Aufgrund der Abmessungen des Wärmeinduktors 17 ist sichergestellt, daß nur der Anteil der Speisen erwärmt wird, der tatsächlich erwärmt werden soll. Beim Einbringen der Speisen die Menüschachteln 14 wird daher immer darauf geachtet, daß der zum Erwärmen bestimmte Anteil der Speisen innerhalb der Reichweite des Wärmeinduktors 17 angeordnet wird. Für die Zufuhr der Hochfrequenz-Energie ist eine flexible elektrische Zuleitung 18 vorgesehen. Soll nun der Inhalt der im Vertikalförderer befindlichen Menüschachteln aufgeheizt werden, so werden die Riemensysteme 9,10 nach Beendigung des betreffenden Fördervorganges angehalten. Die entsprechenden Menüschachteln haben dann die Höhe der Wärmeinduktoren 17 erreicht. Anschließend werden die Wärmeinduktoren 17 in die Zwischenräume 16 eingeschwenkt und der Aufwärmvorgang der in den Menüschachteln 14 befindlichen Speisen wird durch Zufuhr der Hochfrequenzenergie gestartet. Nach erfolgter Erwärmung werden die Wärmeinduktoren 17 wieder in die gestrichelt dargestellte Ruheposition 17a ausgeschwenkt und der Transport der Menüschachteln 14 zu den bereitstehenden Servierwagen 8 wird fortgesetzt. Das Bild zeigt weiterhin den bereits erwähnten Barcode-Scanner anhand des Bezugszeichens 24, der fest mit dem Gehäuse 15 des Vertikalförderers 6 verbunden ist. Zur Verbindung des Barcode-Scanners 24 mit der zentralen Steuereinheit des Gesamtsystems dient eine Datenleitung 25.

## Patentansprüche

1. Vertikalförderer (6) zum Transport von Verpflegungsgütern in Menüschachteln (14) an Bord eines Flugzeuges mit zwei gegensinnig umlaufenden Riemensystemen (9,10), die an den Menüschachteln über quer zur Laufrichtung der Riemen orientierte leistenförmige Mitnehmer (13) angreifen,
dadurch **gekennzeichnet,** daß der Vertikalförderer (5) mindestens eine Aufwärmeinrichtung aufweist, die aus einem um eine vertikale Achse (19) zwischen einer Ruheposition (17a) und einer Arbeitsposition schwenkbaren Paket von Wärmeinduktoren (17) besteht, die jeweils eine Induktionsspule enthalten, wobei die Arbeitsposition darin besteht, daß die Wärmeinduktoren (17) in die zwischen den Menüschachteln (14) bestehenden Zwischenräume (16) eingeschwenkt sind.

2. Vertikalförderer nach Anspruch 1,
dadurch **gekennzeichnet,** daß die Wärmeinduktoren (17) in Arbeitsposition jeweils nur einen Teil der Menüschachteln (14) überdecken.

3. Vertikalförderer nach Anspruch 1 oder 2,
dadurch **gekennzeichnet,** daß das Paket eine größere Anzahl von Wärmeinduktoren (17), vorzugsweise ein Vielfaches von sieben, umfaßt.

4. Vertikalförderer nach Anspruch 3,
dadurch **gekennzeichnet,** daß die Aufwärmeinrichtung mehrere schwenkbare Pakete von Wärmeinduktoren (17) umfaßt.

5. Vertikalförderer nach einem der Ansprüche 1 bis 4,
dadurch **gekennzeichnet,** der Vertikalförderer mindestens eine Abtasteinrichtung aufweist, mit deren Hilfe an den Menüschachteln (14) angebrachte Datenträger auslesbar sind, die Informationen über den Inhalt der Menüschachteln (14) enthalten.

6. Vertikalförderer nach einem der Ansprüche 1 bis 5,
dadurch **gekennzeichnet,** daß die Abtasteinrichtung als optischer Barcode-Scanner (24) bekannter Art ausgebildet ist.

7. Vertikalförderer nach einem der Ansprüche 1 bis 6,
dadurch **gekennzeichnet,** daß die Riemensysteme (9,10) jeweils mindestens aus zwei endlosen Riemen bestehen, woran die Mitnehmer (13) befestigt sind.

8. Vertikalförderer nach einem der Ansprüche 1 bis 7,
dadurch **gekennzeichnet,** daß jedes Riemensystem (9,10) durch ein endloses Band von entsprechender Breite gebildet wird.

## Claims

1. Vertical conveyor (6) for transporting provisions in meal packs (14) on board an aircraft, the said conveyer having two belt systems (9, 10) which revolve in opposite directions and which act upon the meal packs via strip-shaped entrainment means (13) orientated transversely to the direction of running of the belts,
**characterised in that** the vertical conveyor (5) has at least one warming-up apparatus which consists of a set, which can be pivoted about a vertical spindle (19) between a rest position (17a) and a working position, of warmth-inductors (17) which contain an induction coil in each case, the working position consisting in the fact that the warmth-inductors (17) are pivoted into the intervening spaces (16) between the meal packs (14).

2. Vertical conveyor according to claim 1,
**characterised in that**, in the working position, the warmth-inductors (17) cover only part of the meal packs (14) in each case.

3. Vertical conveyor according to claim 1 or 2,
**characterised in that** the set comprises a fairly large number of warmth-inductors (17), preferably a multiple of seven.

4. Vertical conveyor according to claim 3,
**characterised in that** the warming-up arrangement comprises a number of pivotable sets of warmth-inductors (17).

5. Vertical conveyor according to one of claims 1 to 4,
**characterised in that** the vertical conveyor has at least one scanning apparatus with the aid of which data carriers, which are attached to the meal packs (14) and contain items of information about the contents of the said meal packs (14), can be read.

6. Vertical conveyor according to one of claims 1 to 5,
**characterised in that** the scanning apparatus is constructed as an optical bar code-scanner (24) of known type.

7. Vertical conveyor according to one of claims 1 to 6,
**characterised in that** the belt systems (9, 10) consist, in each case, of at least two endless belts to which the entrainment means (13) are fastened.

8. Vertical conveyor according to one of claims 1 to 7,
**characterised in that** each belt system (9, 10) is formed by an endless band of suitable breadth.

## Revendications

1. Transporteur vertical (6) destiné au transport d'aliments contenus dans des boîtes à menus (14) à bord d'un avion, composé de deux systèmes à courroies (9, 10) tournant en sens inverse qui sont en prise avec les boîtes à menus par l'intermédiaire d'organes d'entraînement (13) sous forme de lattes orientés transversalement au sens d'avancement des courroies, caractérisé en ce que le transporteur vertical (5) comporte au moins un dispositif de réchauffage composé d'une série d'inducteurs de chaleur (17) pouvant pivoter autour d'un axe vertical (19) d'une position de repos (17a) à une position de travail et constitués respectivement d'une bobine d'induction, la position de travail consistant à ce que les inducteurs de chaleur (17) soient amenés par pivotement dans les espaces (16) ménagés entre les boîtes à menus (14).

2. Transporteur vertical suivant la revendication 1, caractérisé en ce que les inducteurs de chaleur (17) ne recouvrent respectivement, en position de travail, qu'une partie des boîtes à menus (14).

3. Transporteur vertical suivant la revendication 1 ou 2, caractérisé en ce que la série se compose d'un plus grand nombre d'inducteurs de chaleur (17), de préférence un multiple de sept.

4. Transporteur vertical suivant la revendication 3, caractérisé en ce que le dispositif de réchauffage est composé de plusieurs séries d'inducteurs de chaleur (17).

5. Transporteur vertical suivant l'une quelconque des revendications 1 à 4, caractérisé en ce que le transporteur vertical comporte au moins un dispositif de balayage permettant de lire des supports de données associés aux boîtes à menus (14) et contenant des informations sur le contenu des boîtes à menus (14).

6. Transporteur vertical suivant l'une quelconque des revendications 1 à 5, caractérisé en ce que le dispositif de balayage est conçu comme un scanneur (24) optique de type connu pour la lecture de codes-barres.

7. Transporteur vertical suivant l'une quelconque des revendications 1 à 6, caractérisé en ce que les systèmes à courroies (9, 10) sont chacun constitués de deux courroies sans fin sur lesquelles sont fixés les organes d'entraînement (13).

8. Transporteur vertical suivant l'une quelconque des revendications 1 à 7, caractérisé en ce que chaque système à courroies (9, 10) est formé d'une bande sans fin de largeur correspondante.
